# EUROPEAN PATENT APPLICATION

(11) **EP 0 618 247 A2**
(43) Date of publication of application: **05.10.1994**
(21) Application number: 94200785.7
(22) Date of filing: 30.03.1994
(51) Int. Cl.: C08G 63/189, C08G 63/672

(54) **Polyesters of 2,6-naphthalenedicarboxylic acid with a reduced crystallization rate**

(30) Priority: 31.03.1993 IT MI930628
(71) Applicant: ENIRICERCHE S.p.A., I-20097 S. Donato Milanese (Milano) (IT); ENICHEM S.p.A., I-20124 Milano (IT)
(72) Inventor: Po', Riccardo, I-28100 Novara (IT); Occhiello, Ernesto, I-28100 Novara (IT); Pelosini, Luigi, I-28010 Fontaneto D'Agogna (Novara) (IT); Garbassi, Fabio, I-28100 Novara (IT)
(74) Representative: Fusina, Gerolamo

(57) **Abstract**

Polyesters of 2,6-naphthalenedicarboxylic acid having a reduced crystallization rate obtained by the polycondensation of:
a) at least one diol consisting essentially of a C₂-C₄ alkylene glycol;
b) a diacid consisting essentially of 2,6-naphthalenedicarboxylic acid, possibly substituted with halogens or with C₁-C₄ alkyl radicals, or one of its derivatives;
c) 0.1-5% in moles, with respect to the total sum of the acid components, of at least one dihydroxyterminated polyalkylenglycol having an average molecular weight of between 500 and 5000.

## Description

The present invention relates to polyesters of 2,6-naphthalenecarboxylic acid having a reduced crystallization rate.

More specifically the present invention relates to polyesters of 2,6-naphthalenecarboxylic acid, having a reduced crystallization rate, modified with the introduction of co-monomers consisting of dihydroxyterminated polyether poliols.

The food, pharmaceutical and chemical industries at present use packaging composed of various polymeric materials to preserve food, drugs, cosmetics, detergents, fine chemicals etc.

One of the most interesting groups of polymers is that of saturated polyesters and in particular polyethylene terephthalate (PET) whose use in the preparation of biorientated hollow containers is widely illustrated in U.S. patent 3.733.309.

This material has interesting physico-chemical characteristics such as gas-barrier properties and good mechanical properties. For some applications, however, for example beer containers, the oxygen-barrier properties are not sufficient. It has been observed, in fact, that when bottled in PET, beer deteriorates from an organolectic point of view due to contact with oxygen which is able to migrate throught the walls of the container.

To reduce or eliminate this inconvenience, proposals have been made in literature to modify PET with co-monomers such as isophthalic acid or naphthalendicarboxylic acid or mixtures of PET with other polyesters. Examples of said literature are U.S. patents 4.403.090, 4.398.017, 4.622.268, 4.388.456 and 4.578.437.

It has been generally recognized however that the homopolymer of ethylene glycol and 2,6-naphthalenedicarboxylic acid, i.e. poly(ethylene-2,6-naphthalenedicarboxylate) (PEN) has not only shown improved barrier properties with respect to PET but also much higher glass transition temperatures.

A negative characteristic of PEN lies in the high crystallization rate. This negative characteristic is particularly felt in the production by blow-moulding of food containers, especially refillable bottles. In this case it is necessary to produce parisons with a greater thickness than that of the parisons used in traditional bottles.

A greater thickness creates problems concerning the crystallization of the internal part of the parison owing to a greater difficulty in discharging the heat and also a crystallization rate of the PEN which is too high.

Crystallization of the parison causes a lower mechanical resistance and the opacification of the end product with evident disadvantages.

In addition, minimization of the crystallization of the sprue at the point where it is attached to the parison would give a better shock-resistance of the end-product. To obtain this result prolonged heating times are necessary in the blowing cycle with obvious disadvantages of energy and productivity.

On the basis of what is stated above, it is evident that it is necessary to have a material which eliminates the previously mentioned drawbacks or which has high barrier properties, in particular to oxygen, and a low crystallization rate. At the same time this material must preserve the characteristics of the conventional materials and in particular a glass transition temperature which is compatible with the cycles of the food industry.

The Applicant has now found that by modifying at a molecular level the polymeric chain of 2,6-naphthalenedicarboxylic acid, with suitable reagents, it is possible to prepare polyester resins characterized by a low crystallization rate, the thermal and gas-barrier properties typical of PEN remaining more or less unaltered.

The present invention therefore relates to polyester resins of 2,6-naphthalenedicarboxylic acid having a reduced crystallization rate obtained by the polycondensation of:
a) at least one diol consisting essentially of a C₂-C₄ alkylene glycol;
b) a diacid consisting essentially of 2,6-naphthalenedicarboxylic acid, possibly substituted with halogens or with C₁-C₄ alkyl radicals, or one of its derivatives;
c) 0.1-5% in moles, with respect to the total sum of the acid components, of at least one dihydroxyterminated polyalchylenglycol having an average molecular weight of between 500 and 5000. Derivatives of the diacid in step (b) are essentially C₁-C₄ alkyl esters, halides or anhydrides.

Preferred polyesters according to the present invention are those obtained in the presence of 0.5-2% in moles, with respect to the total of the acid components, of dihydroxy terminated polyalkylenglycol.

Examples of alkylene glycols particularly suitable for the present invention are ethylene glycol and/or butylene glycol. These products can be used alone or mixed with other diols, for example with 0-10% in moles of another diol such as cyclohexandimethanol. The preferred product is, however, ethylene glycol.

The 2,6-naphthalenedicarboxylic acid can be used alone or mixed with other acids, such as terephthalic acid, isophthalic acid, hydroxybenzoic acid, succinic acid, adipic acid, etc., in a quantity of up to 10% in moles.

The dihydroxyterminated polyalkylenglycols which can be used for preparing the polyester resins of the present invention are those wherein the alkylene group has from 1 to 4 carbon atoms. Illustrative examples include polyethylenglycol (PEG), polypropylenglycol (PPG), polytetramethylenglycol (PTMG), copolymers PEG-PPG, etc.

The polyester resins of the present invention have an inherent viscosity, measured in phenol/tetrachloroethane (60/40 by weight) at 30°C with concentrations of 0.25 g/l, higher than 0.4 dl/g, generally between 0.5 and 1.5 dl/g, and they have mechanical properties which do not differ from those of the PENs prepared with conventional monomers.

These resins are also suitable for use in the preparation of shaped articles, such as bottles, fibres, sheets, plates, etc., prepared with the conventional technologies for the transformation of thermoplastic polymers such as, for example, injection moulding, blow-moulding or extrusion. In addition these polyesters can be processed in the form of films, can be used as matrices for composite materials based on fibres or inorganic fillers and can also be used in the preparation of mixtures with other polymers.

A procedure for the preparation of the polyester resins of the present invention includes reacting:
i) at least one diol consisting essentially of a C₂-C₄ alkylene glycol;
ii) a diacid consisting essentially of 2,6-naphthalenedicarboxylic acid, possibly substituted with halogens or with C₁-C₄ alkyl radicals, or one of its derivatives;
iii) 0.1-5% in moles, with respect to the total sum of the acid components, of at least one dihydroxyterminated polyalchylenglycol having an average molecular weight of between 500 and 5000.
More specifically, the procedure of the present invention can be carried out according to what is described in "Comprehensive Polymer Science" G.C. Eastmond, A. Ledwith, S. Russo, P. Singwalt Eds. Pergamon Press, Oxford 1989, vol.5, page 275.

In a typical synthesis procedure which is purely illustrative and not restricting, the reaction mixture, starting from diester of carboxylic acid, is degassed, in a first step, placed in an inert atmosphere (nitrogen) and heated to 180°C, the temperature at which the alcohol discharged in the alcoholysis reaction is distilled.

In a second step, the temperature is then slowly increased to 270-300°C and the pressure reduced to 0.1-0.6 Torr to favour polycondensation.

The reactions which take place during the first step are catalyzed by compounds of an acid nature, for example protic acids such as H₂SO₄, p-toluensulphonic acid, etc. or Lewis acids such as zinc, manganese, cobalt, magnesium acetates, etc. In the subseqeunt polycondensation step, acid oxides result convenient such as those of antimony or germanium or alcoholates of transition metals such as Ti(O-Pri)₄.

The polyester resins of the present invention have a lower crystallization rate than the polyesters prepared without using polyalkylenglycols as co-monomers and these materials are consequently suitable for the production of parisons for refillable containers of liquids. In addition, the lower viscosity of the molten polymer facilitates the extrusion of the material during the transformation processes.

Finally, the glass transition temperature of these polyesters, being equal to or higher than 100°C, enables these materials to be applied in fields which also require a high thermal resistance (heat filling of containers, pastorization, etc.).

The examples which follow are intended to be purely illustrative and consequently do not restrict the present invention in any way.

### EXAMPLE 1

This example describes the preparation of a polyester from dimethyl 2,6-naphthalenedicarboxylate, ethylene glycol and PEG 2000 in a molar percentage of 1%.

1.122 Kg (4.60 moles) of dimethyl 2,6-naphthalenedicarboxylate, 0.615 Kg (9.92 moles) of ethylene glycol, 92 g (0.046 moles) of PEG 2000 and 750 mg of manganese tetrahydrate acetate were charged into a 3 litre reactor.

The reaction mixture was brought to 170°C and kept at this temperature for about 90 minutes to distill the methanol, after which the temperature was brought to 230°C and 600 mg of antimonium trioxide and 2 g of triphenyl phosphate were added.

The pressure was then gradually reduced to 0.5 torr and the temperature was raised to 290°C, maintaining these conditions for about 120 minutes. During this period the excess ethylene glycol was removed. When the apparatus had been brought to room temperature and atmospheric pressure with Na, the polymer obtained, extruded and granulated, had a viscosity of 390 Pa*s. The other physical characteristics are shown in Table 1.

For the crystallization kinetics the samples of polymer molten and kept at 280°C for two minutes were cooled, at the maximum rate allowed by the calorimeter (150°C/min), to the various pre-established crystallization temperatures. The exotherm of isothermic crystallization in relation to the time was then registered and the semicrystallization time (t₁/2) was then found for each temperature, defined as time necessary for releasing heat equal to half of the enthalpy of total crystallization.

The melting point (Tm) and glass transition temperature (Tg) were measured at DSC.

The viscosity of the molten product (MV) was determined by taking the value of apparent viscosity measured at 290°C and 100 1/s of the shear rate using a Goettfert 2002 rheometer.

### EXAMPLE 2

This example describes the preparation of a polyester from dimethyl 2,6-naphthalenedicarboxylate, ethylene glycol and PEG 1000 in a molar percentage of 2%.

Following the procedure described in example 1, 1.122 Kg (4.60 moles) of dimethyl 2,6-naphthalenedicarboxylate, 0.615 Kg (9.92 moles) of ethylene glycol, 92 g (0.092 moles) of PEG 1000, 800 mg of manganese tetrahydrate acetate, 2.5 g of triphenyl phosphate and 600 mg of antimonium trioxide were reacted.

The polymer obtained had a viscosity of 210 Pa*s. The other physico-chemical characteristics are shown in Table 1.

The polyester thus obtained was then regraded by heating under vacuum (0.5 torr) for 7 hours at 235°C. The characteristics of the material are shown in Table 1 (example 2b).

### EXAMPLE 3

This example describes the preparation of a polyester from dimethyl 2,6-naphthalenedicarboxylate, ethylene glycol and PTMG 2000 in a molar percentage of 0.5%.

Following the procedure described in example 1, 1.220 Kg (5.0 moles) of dimethyl 2,6-naphthalenedicarboxylate, 0.68 Kg (11.0 moles) of ethylene glycol, 50.0 g (0.025 moles) of PTMG 2000 were reacted.

The polymer obtained had a viscosity of 330 Pa*s. The other physico-chemical characteristics are shown in Table 1.

The polyester thus obtained was then regraded by heating under vacuum (0.5 torr) for 16 hours at 235°C. The characteristics of the material are shown in Table 1 (example 3b).

### EXAMPLE 4

The same operating conditions as example 3 were adopted, using however 50 g of PTMG 1000 (molar percentage 1%).

The polymer obtained had a viscosity of 600 Pa*s. The other physico-chemical characteristics are shown in Table 1.

The polyester thus obtained was then regraded by heating under vacuum (0.5 torr) for 16 hours at 235°C. The characteristics of the material are shown in Table 1 (example 4b).

### EXAMPLE 5

The same operating conditions as example 1 were adopted, using however 92 g of PTMG 1000 (molar percentage 2%).

The polymer obtained had a viscosity of 580 Pa*s. The other physico-chemical characteristics are shown in Table 1.

The polyester thus obtained was then regraded by heating under vacuum (0.5 torr) for 16 hours at 235°C. The characteristics of the material are shown in Table 1 (example 5b).

### EXAMPLE 6

The same operating conditions as example 3 were adopted, using however 50 g of PEG 1000 (molar percentage 1%).

The polymer obtained had a viscosity of 730 Pa*s. The other physico-chemical characteristics are shown in Table 1.

### EXAMPLE 7 (Comparative)

This example describes the preparation of a polyester from dimethyl 2,6-naphthalenedicarboxylate and ethylene glycol.

The same procedure was adopted as in example 1 without using PEG 2000 as modifier.

The characteristics of the polymer obtained also after regradation, carried out as described in example 3, are shown in Table 1.

**TABLE 1**

| Example | η (dl/g) | Tg (°c) | Tm (°c) | t₁/s (min) | MV (Pa*s) |
|---|---|---|---|---|---|
| 1 | 0.60 | 100 | 265 | 1.1 | 390 |
| 2 | 0.70 | 91 | 255 | 3.8 | 210 |
| 2b | | 92 | 254 | 4.2 | 600 |
| 3 | 0.54 | 114 | 265 | 3.3 | 330 |
| 3b | | 115 | 265 | 4.6 | 570 |
| 4 | 0.66 | 107 | 263 | 2.8 | 600 |
| 4b | | 108 | 263 | 4.3 | 670 |
| 5 | 0.64 | 101 | 261 | 2.4 | 580 |
| 5b | | 100 | 260 | 6.4 | 800 |
| 6 | 0.60 | 96 | 264 | 2.0 | 730 |
| 7(comp) | 0.55 | 113 | 262 | 0.8 | 350 |
| 7b | | 120 | 264 | 0.9 | 520 |

## Claims

1. Polyester resins of 2,6-naphthalenedicarboxylic acid having a reduced crystallization rate obtained by the polycondensation of:
a) at least one diol consisting essentially of a C₂-C₄ alkylene glycol;
b) a diacid consisting essentially of 2,6-naphthalenedicarboxylic acid, possibly substituted with halogens or with C₁-C₄ alkyl radicals, or one of its derivatives;
c) 0.1-5% in moles, with respect to the total sum of the acid components, of at least one dihydroxyterminated polyalchylenglycol having an average molecular weight of between 500 and 5000.

2. Polyester resins according to claim 1, obtained in the presence of 0. 5-2% in moles, with respect to the total sum of the acid components, of chain stoppers having general formula (I).

3. Polyester resins according to claims 1 or 2 having an inherent viscosity, measured in phenol/tetrachloroethane (60/40 by weight) at 30°C with concentrations of 0.25 g/l, higher than 0.4 dl/g.

4. Use of the polyester resins according to any of the previous claims to obtain shaped articles, bottles, films, sheets, plates, fibres.

5. Procedure for the preparation of the polyester resins claimed in any of the previous points which includes reacting:
i) at least one diol basically composed of a C₂-C₄ alkylene glycol;
ii) a diacid basically composed of 2,6-naphthalenedicarboxylic acid, possibly substituted with halogens or with C₁-C₄ alkyl radicals, or one of its derivatives;
iii) 0.1-5% in moles, with respect to the total sum of the acid components, of at least one dihydroxyterminated polyalchylenglycol having an average molecular weight of between 500 and 5000.
